# EUROPÄISCHE PATENTANMELDUNG

(11) **EP 4 456 252 A2**
(43) Veröffentlichungstag der Anmeldung: **30.10.2024**
(21) Anmeldenummer: 24166708.8
(22) Anmeldetag: 27.03.2024
(51) Int. Cl.: H01M 10/48, H01M 10/42

(54) **BATTERIEANORDNUNG FÜR EIN BATTERIESYSTEM SOWIE BATTERIESYSTEM MIT DER BATTERIEANORDNUNG**

(30) Priorität: 28.04.2023 DE 102023111015
(71) Anmelder: Manz AG, 72768 Reutlingen (DE)
(72) Erfinder: Freundt, Martin, 73732 Esslingen (DE)
(74) Vertreter: Kanzlei Dr. Negendanck Patentmanufaktur

(57) **Zusammenfassung**

Batteriepacks weisen oftmals eine Vielzahl von Einzelbatterien auf, wobei die Gesamtleistung des Batterieparks von den Einzelleistungen der Batteriezellen abhängt. Allerdings verhalten sich die einzelnen Batteriezellen im Betrieb nicht unbedingt einheitlich.

Es wird eine Batterieanordnung 1 für ein Batteriesystem 2 mit einer Batterie 3 und mit einer Batterieschichteinrichtung 5, wobei die Batterieschichteinrichtung 5 auf der Batterie 3 aufgebracht ist, wobei die Batterieschichteinrichtung 5 mindestens einen durch Beschichten aufgebrachten Sensorabschnitt 8 zur Erfassung einer Kenngröße der Batterie aufweist.

## Beschreibung

Die Erfindung betrifft eine Batterieanordnung für ein Batteriesystem mit den Merkmalen des Oberbegriffs des Anspruchs 1. Die Erfindung betrifft auch ein Batteriesystem mit einer Mehrzahl derartiger Batterieanordnungen.

Batteriepacks weisen oftmals eine Vielzahl von Einzelbatterien auf, wobei die Gesamtleistung des Batterieparks von den Einzelleistungen der Batteriezellen abhängt. Allerdings verhalten sich die einzelnen Batteriezellen im Betrieb nicht unbedingt einheitlich. Obwohl die Batteriezellen zwar baugleich hergestellt sind, können sich diese aufgrund der Positionierung in dem Batteriepack, statistisch bedingten, unterschiedlichen Alterungseigenschaften oder aufgrund von herstellungsbedingten Streuungen unterschiedlich verhalten. Es ist vergleichsweise einfach, zusammenfassende Daten über das Batteriepack, wie zum Beispiel die Temperatur oder dergleichen zu erfassen. Es stellt jedoch eine Herausforderung dar, die einzelnen Batteriezellen zu überwachen.

Es ist eine Aufgabe der vorliegenden Erfindung, eine Batterieanordnung für ein Batteriesystem vorzuschlagen, welche besonders einfach überwacht werden kann.

Diese Aufgabe wird durch eine Batterieanordnung mit den Merkmalen des Anspruchs 1 sowie durch ein Batteriesystem mit den Merkmalen des Anspruchs 15 gelöst. Bevorzugte oder vorteilhafte Ausführungsformen der Erfindung ergeben sich aus den Unteransprüchen, der nachfolgenden Beschreibung sowie den beigefügten Figuren.

Die Erfindung betrifft somit eine Batterieanordnung, welche insbesondere für ein Batteriesystem geeignet und/oder ausgebildet ist.

Die Batterieanordnung weist mindestens eine Batterie auf. Die Batterie ist insbesondere als eine Einzelzelle ausgebildet. Es kann jedoch auch vorgesehen sein, dass die Batterie als eine Mehrfachzelle realisiert ist. Die Batterie kann insbesondere als eine aufladbare Batterie, im Speziellen als ein Akkumulator, ausgebildet sein. Insbesondere speichert die Batterie die Energie auf einer elektrochemischen Basis. Alternativ ist die Batterie als eine Kondensatorbatterie ausgebildet.

Die Batterieanordnung weist eine Batterieschichteinrichtung auf, wobei die Batterieschichteinrichtung auf der Batterie angeordnet ist. Insbesondere weist die Batterie eine Hülle auf, wobei die Batterieschichteinrichtung unmittelbar auf der Hülle der Batterie aufgebracht ist. Die Hülle definiert einen abgeschlossenen Innenraum, wobei in dem Innenraum der Energiespeicher, insbesondere mindestens eine galvanische Zelle, der Batterie angeordnet ist. Die Hülle weist bevorzugt eine abgedichtete Durchführung für mindestens einen Pol der Batterie auf. Die Hülle kann beispielsweise als eine Kunststoffhülle oder als eine Metallhülle realisiert sein.

Im Rahmen der Erfindung wird vorgeschlagen, dass die Batterieschichteinrichtung mindestens einen Sensorabschnitt zur Erfassung einer Kenngröße der Batterie aufweist, wobei der Sensorabschnitt durch Beschichten auf die Batterie und/oder als Beschichtung der Batterie ausgebildet ist. Insbesondere umfasst die Batterieschichteinrichtung eine Schaltung, wobei die Schaltung durch Beschichten aufgebracht ist und/oder als Beschichtung ausgebildet ist, wobei der Sensorabschnitt einen Teilabschnitt der Schaltung bildet. Die Beschichtung zur Erzeugung des Sensorabschnitts und/oder der Schaltung wird insbesondere durch Aufbringen einer festhaftenden Schicht aus formlosem Stoff, insbesondere von einer funktionalen Tinte und/oder von einer funktionalen Farbe, auf die Oberfläche der Batterie oder einer vorhergehenden Schicht der Batterieschichteinrichtung umgesetzt. Insbesondere wird der Sensorabschnitt durch Beschichten auf die Batterie als Tragkörper aufgebracht.

Besonders bevorzugt wird der Sensorabschnitt und/oder die Schaltung aufgedruckt. Der Druck erfolgt insbesondere durch das Aufdrucken von der funktionalen Tinte und/oder von der funktionalen Farbe auf die Batterie, im Speziellen auf die Hülle der Batterie, oder auf eine vorhergehende Schicht der Batterieschichteinrichtung. Beispielsweise erfolgt der Druckvorgang über ein Ink-Jet-Verfahren.

Es ist dabei eine Überlegung der Erfindung, dass durch das Aufbringen des mindestens einen Sensorabschnitts auf der Batterie durch Beschichten und somit unmittelbar auf das Prüfobjekt eine besonders genaue Überwachung der Batterie ermöglicht wird. Dadurch, dass der mindestens einen Sensorabschnitt durch Beschichten aufgebracht wird, nimmt dieser quasi keinen Bauraum in Anspruch, so dass bei der Integration der Batterieanordnung in das Batteriesystem keine Platzschwierigkeiten aufgrund einer Störkontur durch die Batterieschichteinrichtung auftreten können.

Es ist bevorzugt, dass die Batterieschichteinrichtung, insbesondere der Sensorabschnitt, eine Dicke von weniger als 25 µm, insbesondere von weniger als 10 µm und im Speziellen von weniger als 1 µm aufweist. Durch die geringe Dicke wird die Integration der Batterieanordnung in das Batteriesystem weiter verbessert, so dass die Batterieanordnung in dem Batteriesystem besonders einfach überwacht werden kann.

Die Batterieschichteinrichtung kann mehrere Schichten aufweisen. So kann die Batterieschichteinrichtung eine Bodenschicht aufweisen, wobei die Bodenschicht insbesondere unmittelbar mit der Batterie, insbesondere mit der Hülle verbunden ist. Auf der Bodenschicht ist die Schaltung und/oder der Sensorabschnitt als Beschichtung mittelbar oder unmittelbar aufgebracht. Die Bodenschicht kann im Vergleich mit der Schaltung und/oder mit dem Sensorabschnitt weniger Details aufweisen, so dass zur Erzeugung der Bodenschicht ein weniger genaues Aufbringverfahren gewählt werden kann. So ist es beispielsweise möglich, dass die Bodenschicht aufgeklebt ist. Da aber ein derartiges Aufkleben eine Vergrößerung der Dicke der Batterieschichteinrichtung und damit einen größeren Abstand zwischen dem Sensorabschnitt und der Batterie bedeuteten würde, ist es bevorzugt, dass auch die Bodenschicht durch Beschichten, insbesondere Bedrucken aufgebracht ist. Die Bodenschicht ist insbesondere als eine Isolationsschicht und/oder als eine Haftvermittlerschicht ausgebildet.

Die Batterieschichteinrichtung kann auch eine Deckschicht aufweisen, wobei die Deckschicht auf dem Sensorabschnitt und/oder der Schaltung aufgebracht ist. Die Deckschicht kann im Vergleich mit der Schaltung und/oder mit dem Sensorabschnitt weniger Details aufweisen, so dass zur Erzeugung der Deckschicht ein weniger genaues Aufbringverfahren gewählt werden kann. So ist es beispielsweise möglich, dass die Deckschicht aufgeklebt ist. Es ist bevorzugt, dass die Deckschicht durch Beschichten, insbesondere Bedrucken aufgebracht ist.

Bei einer ersten möglichen Ausgestaltung der Erfindung weist der Sensorabschnitt einen Temperatursensor auf, wobei der Temperatursensor zur Messung einer Temperatur der Batterie als die Kenngröße ausgebildet ist. Dadurch, dass der Temperatursensoren über die Batterieschichteinrichtung unmittelbar an der Batterie anliegt, kann die Temperatur als Kenngröße besonders genau erfasst werden. Der Temperatursensor kann beispielsweise über einen durch Beschichten aufgebrachten, wärmeabhängigen Widerstand umgesetzt werden.

Bei einer Weiterbildung oder einer Alternative der Erfindung weist der Sensorabschnitt einen Dehnungsmessstreifensensor auf, wobei der Dehnungsmessstreifensensor zur Messung einer Ausdehnung der Batterie als die Kenngröße ausgebildet ist. Während bislang mechanische Verformungen der Batterie nur indirekt, zum Beispiel über beabstandet angeordnete Temperatursensoren erfasst und abgeleitet werden konnten, kann durch den in den Sensorabschnitt integrierten Dehnungsmessstreifensensor eine entsprechende Ausdehnung der Batterie unmittelbar als Kenngröße erfasst werden.

Bei einer Weiterbildung oder einer Alternative der Erfindung weist der Sensorabschnitt einen Alterungs- und/oder Zyklussensor auf, wobei der Alterungs- und/oder Zyklussensor zur Messung einer Alterung und/oder einer Zykluszahl der Batterie als die Kenngröße ausgebildet ist. Dadurch, dass der Alterungs- und/oder Zyklussensor unmittelbar auf der Batterie aufgebracht ist, kann dieser die entsprechende Kenngröße sehr genau erfassen. Die Alterung und/oder die Zykluszahl kann z.B. über eine Materialveränderung, z.B. eine Degradation des Sensorabschnitts erfasst werden, welche nachfolgend ausgewertet wird.

Bei einer ersten möglichen Ausgestaltung der Erfindung ist der Sensorabschnitt, insbesondere der Sensor in einer Zickzack-Struktur und/oder Wellenform auf der Batterie aufgebracht. Für den Fall, dass die Batterie eine obere Polseite und einen daran anschließenden Batteriekörper aufweist, kann der Sensorabschnitt, insbesondere der Sensor, in Höhenrichtung oszillierend aufgebracht sein. Durch diese Ausgestaltung kann eine besonders große Fläche der Batterie als Messfläche verwendet werden.

Bei einer alternativen Ausgestaltung ist der Sensorabschnitt, insbesondere der Sensor, umlaufend, insbesondere mehrfach umlaufend und/oder spiralförmig umlaufend um die Batterie ausgebildet. Dieser Ausgestaltung, insbesondere in der Variante mit dem Dehnungsmessstreifen, hat den Vorteil, dass aufgrund der Länge des Sensorabschnitts, insbesondere des Sensors, und der umlaufenden Anordnung des Sensorabschnitts, insbesondere des Sensors eine sehr genaue Erfassung der Kenngröße möglich ist.

Bei einer bevorzugten Weiterbildung der Erfindung weist die Batterieschichteinrichtung einen Anzeigeabschnitt zur Anzeige einer Kenngröße oder zur Anzeige der Kenngröße des Sensorabschnitts auf, wobei der Anzeigeabschnitt durch Beschichten aufgebracht ist. Insbesondere bildet der Anzeigeabschnitt einen Teilabschnitt der Schaltung. Die Beschichtung zur Erzeugung des Anzeigeabschnitts und/oder der Schaltung wird insbesondere durch Aufbringen einer festhaftenden Schicht aus formlosem Stoff auf die Oberfläche der Batterie oder einer vorhergehenden Schicht umgesetzt. Besonders bevorzugt wird der Anzeigeabschnitt aufgedruckt. Der Druck erfolgt insbesondere durch das Aufdrucken von einer funktionalen Tinte und/oder von einer funktionalen Farbe auf die Batterie, im Speziellen auf die Hülle der Batterie, oder auf eine vorhergehende Schicht der Batterieschichteinrichtung. Beispielsweise erfolgt der Druckvorgang über ein Ink-Jet-Verfahren. Insbesondere werden der Sensorabschnitt und der Anzeigeabschnitt mit dem gleichen Beschichtungsverfahren aufgebracht.

Es wird somit vorgeschlagen, dass nicht nur eine oder die Kenngröße erfasst wird, sondern diese auch visuell dargestellt wird. Diese visuelle Darstellung kann z.B. für das menschliche Auge geeignet und/oder optional als unsichtbare oder sichtbare Strahlung über eine geeignete Beobachtungseinrichtung erfassbar sein. Die Beobachtungseinrichtung kann beispielsweise als eine Kamera ausgebildet sein.

Bei einer möglichen Ausgestaltung ist der Anzeigeabschnitt als eine passive Anzeige ausgebildet. Beispielsweise kann der Anzeigeabschnitt als ein in Abhängigkeit der Kenngröße veränderbarer Flächenbereich ausgebildet sein, welcher bei Änderung der Kenngröße sich verfärbt, die Farbe wechselt oder eine Grautonänderung durchführen. Bei dieser Ausgestaltung kann eine Veränderung der Kenngröße oder die Kenngröße selbst durch die Änderung der passiven Anzeige in einfacher Weise automatisiert oder manuell abgelesen werden.

Bei einer Alternative oder Ergänzung ist der Anzeigeabschnitt fremdenergieversorgbar ausgebildet und/oder bildet eine aktive Anzeige. Die Batterieschichteinrichtung mit dem mindestens einen gedruckten Sensorabschnitt und dem Anzeigeabschnitt kann beispielsweise an eine Auswerteeinrichtung angeschlossen werden, wobei dieser über die Auswerteeinrichtung mit Energie versorgt wird. Der Anzeigeabschnitt kann die zugeführte Energie nutzen, um eine aktive Anzeige zu bilden und die Kenngröße und/oder eine Veränderung der Kenngröße anzeigen.

Bei einer möglichen Ausgestaltung der Erfindung ist der Anzeigeabschnitt zur Aussendung einer thermischen Strahlung zur Anzeige der Kenngröße ausgebildet. Beispielsweise kann der Anzeigeabschnitt einen Widerstandsdraht oder dergleichen aufweisen, welcher eine Infrarotstrahlung und/oder thermische Strahlung aussendet.

Bei einer alternativen Ausgestaltung der Erfindung weist der Anzeigeabschnitt eine Halbleiterstruktur zur Aussendung einer Lichtstrahlung zur Anzeige der Kenngröße auf. Beispielsweise kann der Anzeigeabschnitt als ein OLED ausgebildet sein, welcher die Kenngröße z.B. symbolisch, als Ampel etc. anzeigen kann.

Bei einer bevorzugten Weiterbildung der Erfindung weist die Batterieanordnung ein Kontaktelement zur Kontaktierung der Batterie, insbesondere des Pols mit einer Verbraucherstruktur auf. Das Kontaktelement kann beispielsweise als ein Metallstreifen, eine Kontaktierungsstruktur etc. ausgebildet sein. Insbesondere ist das Kontaktelement zumindest im Kontaktierungsbereich biegesteif ausgebildet. Im Speziellen ist die Fügestelle des Kontaktelements biegesteif ausgebildet. Der Übergang zwischen der Fügestelle und einer Hauptstruktur des Kontaktelements zum Ableiten des von ggf. verschiedenen Batterien eingesammelten Stroms kann biegeweich ausgebildet sein, damit ein Toleranzausgleich stattfinden kann, um thermische Bewegungen, geometrische Toleranzen, Ausgleichsbewegung beim Zusammenfügen usw. auszugleichen und damit keine Spannungen oder reduzierte Spannungen in der Fügestelle entstehen und die Verbindung nicht durch Spannungen im Material geschädigt wird. Lokal (insbesondere in wenigen Millimetern gemessen), ist das Kontaktelement jedoch bevorzugt biegesteif ausgebildet, insbesondere, da die Aspektverhältnisse in dem Kontaktierungsbereich das sicherstellen. Über das Kontaktelement wird der Pol beispielsweise mit einer Verbraucherstruktur verbunden.

Ferner weist die Batterieanordnung eine Versorgungsschichteinrichtung zur Kontaktierung der Batterieschichteinrichtung auf, wobei die Versorgungsschichteinrichtung auf dem Kontaktelement per Beschichtung aufgebracht ist. Auf diese Weise wird die Beschichtungstechnik nicht nur auf der Batterie angewandt, sondern auch auf dem Kontaktelement. Es ist somit möglich, nicht nur die Kenngrößen durch den Sensorabschnitt der Batterieschichteinrichtung zu messen, sondern über die Versorgungsschichteinrichtung auch zu einer Auswerteeinrichtung zu führen. Die Beschichtung zur Erzeugung der Versorgungsschichteinrichtung wird insbesondere durch Aufbringen einer festhaftenden Schicht aus formlosem Stoff auf die Oberfläche der Batterie oder einer vorhergehenden Schicht umgesetzt. Besonders bevorzugt wird die Versorgungsschichteinrichtung aufgedruckt. Der Druck erfolgt insbesondere durch das Aufdrucken von einer funktionalen Tinte und/oder von einer funktionalen Farbe auf das Kontaktelement. Beispielsweise erfolgt der Druckvorgang über ein Ink-Jet-Verfahren.

Bevorzugt weist die Batterieschichteinrichtung eine Batterieschnittstelle und die Versorgungsschichteinrichtung eine Versorgungsschnittstelle auf. Die Schnittstellen sind so ausgebildet, insbesondere angeordnet, dass diese bei einer Kontaktierung der Batterie mit dem Kontaktelement miteinander verbunden werden. Beispielsweise wird das Kontaktelement in einer Kontaktierungsrichtung auf die Batterie aufgesetzt, wobei sich ein elektrischer Kontakt zwischen der Batterieschnittstelle und der Versorgungsschnittstelle durch das Aufsetzen des Kontaktelements auf die Batterie selbsttätig mit ergibt.

Es besonders bevorzugt, dass die Batterie eine Polseite mit mindestens einem Pol und das Kontaktelement eine Kontaktseite zur Kontaktierung des Pols aufweist. Es ist vorgesehen, dass die Batterieschnittstelle auf der Polseite und die Versorgungsschnittstelle auf der Kontaktseite angeordnet sind. Auf diese Weise wird durch eine Kontaktierung des Kontaktelements mit dem Pol zugleich eine Kontaktierung zwischen der Versorgungsschnittstelle und der Batterieschnittstelle durchgeführt.

Beispielsweise können die Batterieschnittstelle und/oder die Versorgungsschnittstelle Kontaktbereiche aufweisen, wobei die Kontaktbereiche durch ein Beschichten, insbesondere Aufdrucken von leitfähigen Elastomere gebildet sein können. Die leitfähigen Elastomere sind elastisch ausgebildet, so dass etwaige Toleranzen bei der Kontaktierung durch die Elastizität der leitfähigen Elastomere kompensiert werden kann.

Bei einer bevorzugten Realisierung der Erfindung ist die Batterieschnittstelle und/oder die Versorgungsschnittstelle für eine Vierpunktmessung von einem Widerstandswert des Sensorabschnitts ausgebildet. Insbesondere, wenn der Sensorabschnitt als ein Temperatursensor und/oder Dehnungsmessstreifensensor ausgebildet ist, ändert sich der Widerstand in dem Sensorabschnitt in Abhängigkeit von der Kenngröße. Durch die Vierpunktmessung kann der Widerstandswert fehlerfrei aus dem Sensorabschnitt ausgelesen werden.

Die Batterieanordnung kann optional eine Auswerteeinrichtung zur messtechnischen Erfassung der Kenngrößen des Sensorabschnitts aufweisen. Die Auswerteeinrichtung ist vorzugsweise über die Versorgungsschichteinrichtung mit der Batterieschichteinrichtung signaltechnisch verbunden. Alternativ oder ergänzend weist die Batterieanordnung eine Beobachtungseinrichtung zur visuellen Erfassung der Anzeige des Anzeigeabschnitts auf. Durch die Beobachtungseinrichtung, wie zum Beispiel eine Kamera oder dergleichen, kann eine Überwachung des Batteriesystems und/oder der Batterieanordnung automatisiert werden.

Ein weiterer Gegenstand der Erfindung betrifft ein Batteriesystem, wobei das Batteriesystem eine Vielzahl der Batterieanordnungen aufweist, wie diese zuvor beschrieben wurde bzw. nach einem der vorhergehenden Ansprüche. Das Batteriesystem kann beispielsweise als ein Batteriesystem für einen elektrischen Antrieb eines Fahrzeugs ausgebildet sein. Es kann jedoch auch als ein stationärer oder mobiler Energiespeicher ausgebildet sein. Prinzipiell kann das Batteriesystem wenige Batterieanordnungen aufweisen, z.B. mehr als 2, 3, 4 oder 5. Die Batterie kann als ein gerader Zylinder, insbesondere Kreiszylinder ausgebildet sein. Insbesondere bildet die Batterie eine Rundzelle. Alternativ ist die Batterie rechteckig oder quaderförmig ausgebildet. Insbesondere kann die Batterie als "Blade" ausgebildet sein, welches als schmaler Quader ausgebildet ist. Vorzugsweise weist das Batteriesystem mindestens 50, insbesondere mindestens 80, im Speziellen mindestens 100 der Batterieanordnungen auf, insbesondere in der Ausbildung als Zylinder auf. In dem Fall, dass statt zylindrischer Zellen Zellen mit rechteckigem Format verwendet werden, kann die Anzahl kleiner sein, also weniger als 50, sollte mindestens jedoch 6 oder 10 oder 16 betragen.

Bevorzugt weist das Batteriesystem größtenteils oder ausschließlich Batterieanordnungen auf, so dass ein Großteil oder alle Batterien überwacht sind.

Bevorzugt wird der Sensorabschnitt auf die Oberfläche der Zelle als Batterie gedruckt, so dass die Temperatur der Zelle oder eine andere Kenngröße direkt mit wenigen Mikrometer Isolationsschicht zwischen Zelle und Sensorabschnitt erfasst werden kann Der Sensor des Sensorabschnitts kann als temperatur- oder dehnungssensitives Element ausgeführt werden, hierbei muss kein spezifischer Widerstandswert eingestellt werden, da der Zyklus einer Zelle als Referenz genommen werden kann und somit nur eine relative Widerstandsänderung ausgewertet werden muss und keine Kalibrierung des Werts gegenüber Absolutwerte der Kenngrößen notwendig ist. Der Lastzyklus den die Zelle erlebt ist visuell oder elektrisch auf der Oberfläche der Zelle darstellbar, so dass zu einem späterem Zeitpunkt die Information über in der Vergangenheit vorliegende Betriebszustände möglich ist (z. B.: Maximaltemperatur, Temperatur-Last-Kollektiv). Es wird eine oberflächliche Bedruckung der Bauteile mit funktionalen Schichten umgesetzt. Je nach Funktionsvariante können Kontaktierungsschnittstellen für einen Abgriff elektrischer Signale zu einer zentralen Kontaktiereinheit vorgesehen sein, die die Signale zu einem Batteriemanagementsystem verbindet.

Mögliche Vorteile der Erfindung sind:
- Direkte Anbindung der Sensorik auf dem Objekt des Interesses
- Geringste Materialmengen und Gewichte, somit auch keine dynamischen Belastungen z.B. Vibrationen
- Oberflächlich versiegelbar mit dünnsten Schichten
- Geometrisch so klein, dass "kein" Bauraum dafür berücksichtig werden muss und die Funktionen in Oberflächen "verschwinden" können

Weitere Merkmale, Vorteile und Wirkung der Erfindung ergeben sich aus der nachfolgenden Beschreibung bevorzugter Ausführungsbeispiele der Erfindung sowie der beigefügten Figuren. Diese zeigen:
Figur 1 eine schematische Schnittansicht durch eine Batterieanordnung als ein Ausführungsbeispiel der Erfindung;
Figur 2 - 5 jeweils eine schematische, dreidimensionale Darstellung einer Batterieanordnung als ein Ausführungsbeispiel der Erfindung:
Figur 6 a, b eine schematisch, dreidimensionale Darstellung von einer Kontaktierungssituation der vorhergehenden Ausführungsbeispiele.

Einander entsprechende oder gleiche Teile sind in den Figuren jeweils mit den gleichen Bezugszeichen versehen.

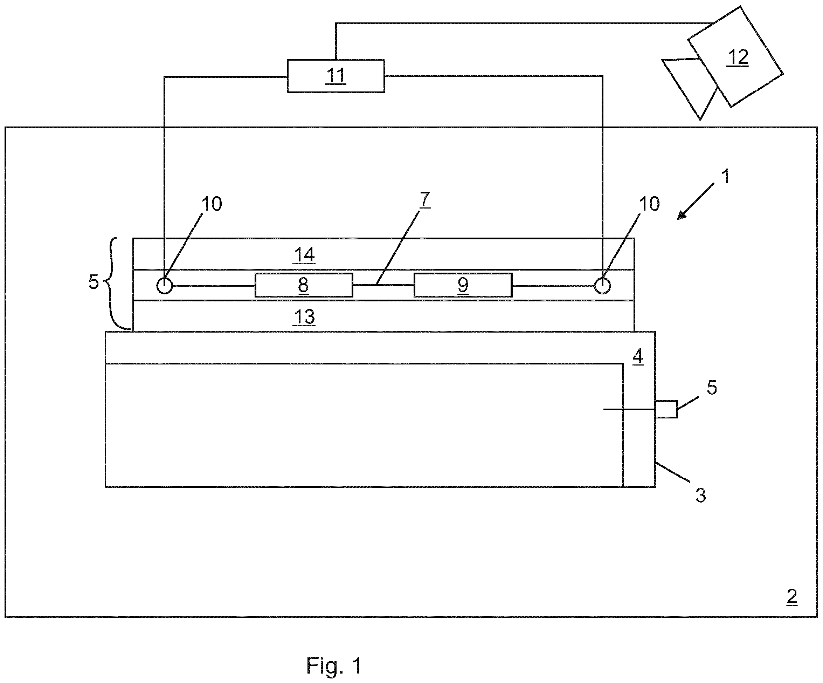

Die Figur 1 zeigt eine schematische Schnittdarstellung von einer Batterieanordnung 1 für ein Batteriesystem 2 als ein Ausführungsbeispiel der Erfindung. Die Batterieanordnung 1 beinhaltet eine Batterie 3, wobei die Batterie 3 eine Hülle 4 aufweist, welche einen Innenraum der Batterie 3 umschließt. Beispielsweise werden durch die Hülle 4 elektrische Verbindungen für Pole 5 der Batterie 3 durchgeführt. Die Hülle 4 kann als eine Kunststoffhülle oder als eine Metallhülle ausgebildet sein. Die Batterie 3 kann beispielhaft eine Zylinderform oder eine Quaderform einnehmen.

Auf der Außenfläche der Batterie 3, insbesondere auf der Hülle 4, ist eine Batteriebeschichtung 5 angeordnet, so dass diese in einem unmittelbaren, körperlichen Kontakt mit der Batterie 3, insbesondere mit der Hülle 4, steht.

Die Batteriebeschichtung 5 weist eine Schaltung 7 auf, wobei Schaltung 7 durch Beschichten und/oder als Beschichtung, insbesondere in der dargestellten Endposition, aufgebracht ist. Insbesondere wird die Schaltung 7 durch das Beschichten auf die Batterie 3 aufgebracht.

Die Schaltung 7 weist mindestens einen Sensorabschnitt 8 auf, wobei der Sensorabschnitt 8 durch Beschichten, insbesondere in der dargestellten Endposition, aufgebracht ist. Der Sensorabschnitt 8 ist ausgebildet, mindestens eine Kenngröße der Batterie 3 zu erfassen. Optional ergänzend kann die Schaltung 7 einen Anzeigeabschnitt 9 aufweisen, welcher einen Teilabschnitt der Schaltung 7 bildet und welcher durch Beschichten aufgebracht ist. Der Anzeigeabschnitt 8 ist ausgebildet eine Kenngröße der Batterie 3 und/oder die Kenngröße von den Sensorabschnitt 8 der Batterie 3 anzuzeigen. Die Batterieschichteinrichtung 5, insbesondere die Schaltung 7, weist eine Batterieschnittstelle 10 auf, wobei die Batterieschnittstelle 10 eine elektrische und/oder elektronische Schnittstelle für den Sensorabschnitt 8 und/oder die den Anzeigeabschnitt 9 und insbesondere der Schaltung 7 bildet.

Der Sensorabschnitt 8 kann einen Sensor umfassen oder diesen bilden, wobei der Sensor beispielsweise als ein Temperatursensor, ein Dehnungsmessstreifensensor und/oder ein Alterungs- und/oder Zyklussensor ausgebildet ist. Es ist auch möglich, dass die Batterieschichteinrichtung 6 eine beliebige Auswahl der genannten Sensoren in einem Sensorabschnitt 8 oder mehreren Sensorabschnitten 8 aufweist.

Der Anzeigeabschnitt 9 kann als eine passive Anzeige ausgebildet sein, wobei die Kenngröße durch eine Farbänderung, Helligkeitsänderung oder eine andere optische Signalgebung angezeigt wird. Alternativ hierzu ist der Anzeigeabschnitt 9 als ein aktiver Anzeigeabschnitt 9 ausgebildet, wobei dieser mit Fremdenergie versorgt ist. Der Anzeigeabschnitt 9 kann zur aktiven Anzeige der Kenngröße beispielsweise eine Wärmestrahlung oder thermische, insbesondere für das menschliche Auge unsichtbare, Strahlung aussenden, die die Anzeige der Kenngröße bildet. Alternativ hierzu kann der Anzeigeabschnitt 9 eine Halbleiterstruktur zur Aussendung einer Lichtstrahlung zur Anzeige der Kenngröße aufweisen. Beispielsweise weist der Anzeigeabschnitt einen OLED auf.

Die Batterieanordnung 1 kann eine Auswerteeinrichtung 11 aufweisen, wobei die Auswerteeinrichtung 11 über die Batterieschnittstelle 10 mit dem Sensorabschnitt 8, dem Anzeigeabschnitt 9 und/oder der Schaltung 7 elektronisch und/oder elektrisch und/oder datentechnisch verbunden ist. Die Auswerteeinrichtung 11 hat zum einen die Funktion, die Kenngröße der Batterie 3 aus der Schaltung 7, insbesondere aus dem Sensorabschnitt 8 auszulesen. Zum anderen hat die Auswerteeinrichtung 11 bei dem optionalen Anzeigeabschnitt 9 die Aufgabe, diesen mit Fremdenergie zu versorgen, so dass dieser die Kenngröße anzeigen kann.

Die Anzeige der Kenngröße durch den Anzeigeabschnitt 9 kann visuell von einem Benutzer erfasst werden. Alternativ hierzu weist die Batterieanordnung 1 eine Beobachtungseinrichtung 12 auf, wobei die Beobachtungseinrichtung 12 die Anzeige des Anzeigeabschnitts 9 erfassen kann. Beispielsweise können Bilder des Anzeigeabschnitts 9 und/oder die angezeigte Kenngröße an die Auswerteeinrichtung 11 zur weiteren Verarbeitung weitergeleitet werden.

Die Batterieschichteinrichtung 5 kann eine Bodenschicht 13 aufweisen, wobei die Bodenschicht 13 auf die Batterie 3, insbesondere auf die Hülle 4 aufgebracht ist. Die Bodenschicht 13 kann in einfacher Weise aufgeklebt sein. Mit dem Blick auf eine geringe Dicke der Batterieschichteinrichtung 6 wird diese jedoch durch Beschichten, insbesondere Bedrucken aufgebracht. Der Sensorabschnitt 8, der Anzeigeabschnitt 9 und/oder die Schaltung 7 und/oder die Batterieschnittstelle 10 sind auf die Bodenschicht 13 mittelbar und/oder unmittelbar durch Beschichten aufgebracht. Insbesondere sind die genannten Komponenten aufgedruckt. In Abhängigkeit der Ausgestaltung der Hülle 4 kann auf die Bodenschicht 13 teilweise oder vollständig verzichtet werden.

Ferner weist die Batterieschichteinrichtung 6 eine Deckschicht 14 auf, wobei die Deckschicht 14 unmittelbar oder mittelbar auf den Sensorabschnitt 8, dem Anzeigeabschnitt 9 und/oder auf der Schaltung 7 aufgebracht ist. Die Deckschicht 14 kann aufgeklebt sein, mit Blick auf eine geringe Dicke der Schichteinrichtung 5 wird diese besser durch Beschichten, insbesondere Bedrucken aufgebracht.

Die Gesamtdicke der Batterieschichteinrichtung 6 und/oder der Schicht mit der Schaltung 7, dem Sensorabschnitt 8 und/oder dem Anzeigeabschnitt 9 ist kleiner als 25 µm, insbesondere kleiner als 10 µm ausgebildet, um keinen unnötigen Bauraum in dem Batteriesystem 2 zu verschwenden.

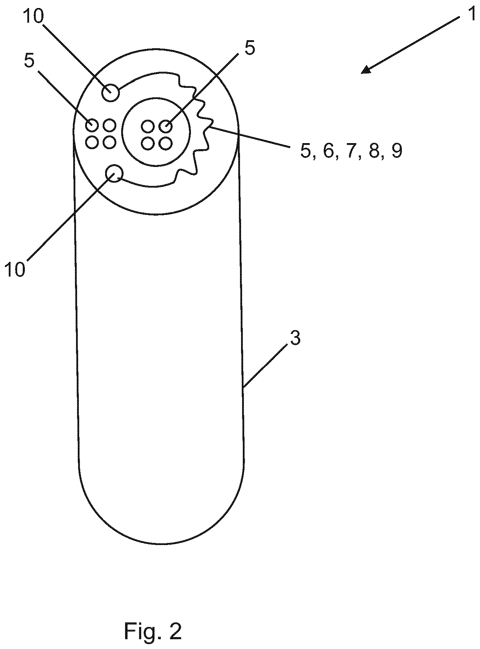

Die Figur 2 zeigt in einer schematischen, dreidimensionalen Darstellung die Batterieanordnung 1 mit der Batterie 3, wobei die Batterie 3 einen zylinderförmigen oder quaderförmigen Grundkörper aufweist. Der Sensorabschnitt 8, optional der Anzeigeabschnitt 9 und die Batterieschnittstelle 10 als Schaltung 7 der Batterieschichteinrichtung 5 sind auf einer Stirnseite der Batterie 3 angeordnet, auf der auch die Pole 5 positioniert sind. Die Schaltung 7 mit dem Sensorabschnitt 8 ist koaxial um einen zentralen positionierten Pol 5 angeordnet. In dieser Ausgestaltung kann der optionale Anzeigeabschnitt 9 besonders einfach betrachtet werden.

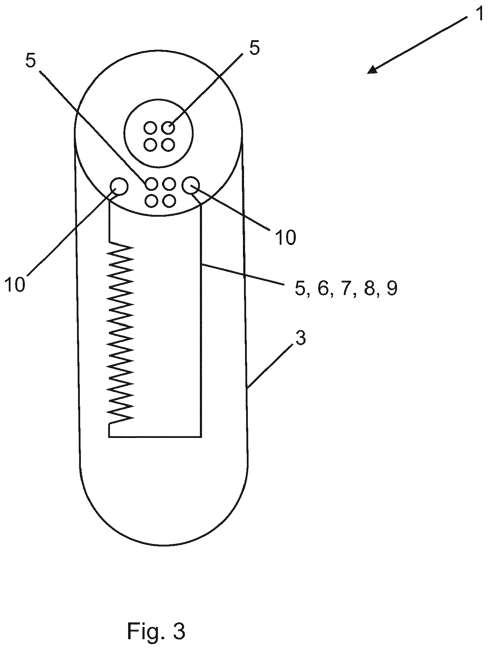

Die Figur 3 zeigt die Batterieanordnung 1 der vorhergehenden Figuren mit einer alternativen Ausbildung der Batterieschichteinrichtung 5. Bei dieser Ausbildung ist der Sensorabschnitt 8, ausgebildet als eine Zick-Zack-Linie, auf der Zylinderaußenfläche der Batterie 3 positioniert. Auch der optionale Anzeigeabschnitt 9 kann auf der Zylinderaußenfläche angeordnet sein. Die Batterieschnittstelle 10 ist dagegen auf der Stirnseite positioniert. Bei dieser Ausgestaltung kann die Kenngröße der Batterie 3 über einen Großteil der Länge der Batterie 3 erfasst werden.

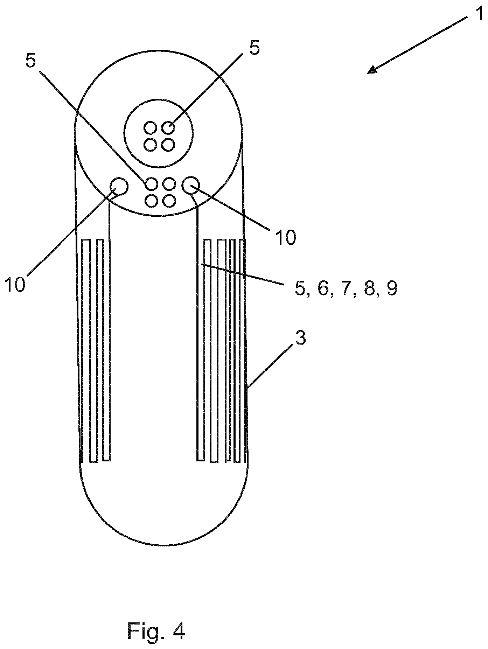

Die Figur 4 eine Abwandlung von dem Ausführungsbeispiel in der Figur 3, wobei der Sensorabschnitt 8 in Höhenrichtung zwischen den Stirnseiten der Batterie 3 hin- und herläuft und dabei die Batterie 3 umlaufend ausgebildet ist.

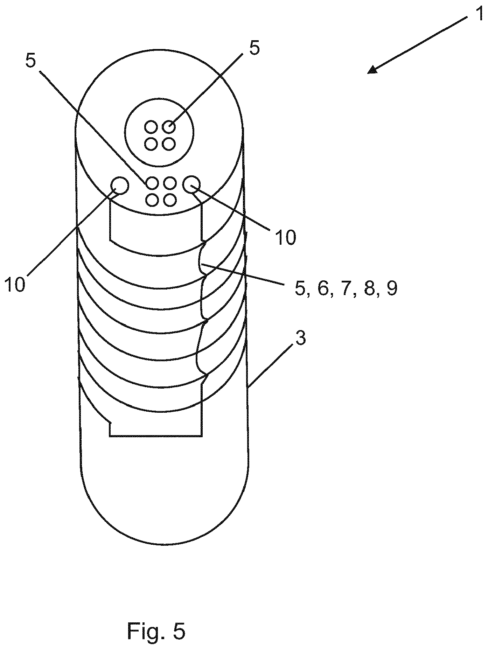

Die Figur 5 zeigt die Batterieanordnung 1 in der gleichen Darstellung wie die vorhergehenden Figuren. Die Batterieschnittstelle 10 ist wie bei den vorhergehenden Figuren auf der Stirnseite der Batterie 3 angeordnet. Die Schaltung 7 mit dem Sensorabschnitt 8 verläuft umlaufend und/oder spiralförmig um die Batterie 3. In dieser Ausgestaltung kann zum einen eine Temperatur besonders engmaschig überwacht werden. Besonders gut kann allerdings eine Ausdehnung der Batterie 3 erfasst werden, da der Sensorabschnitt 8, insbesondere der Dehnungsmessstreifensensor mehrfach um den Batteriekörper der Batterie 3 gewickelt ist.

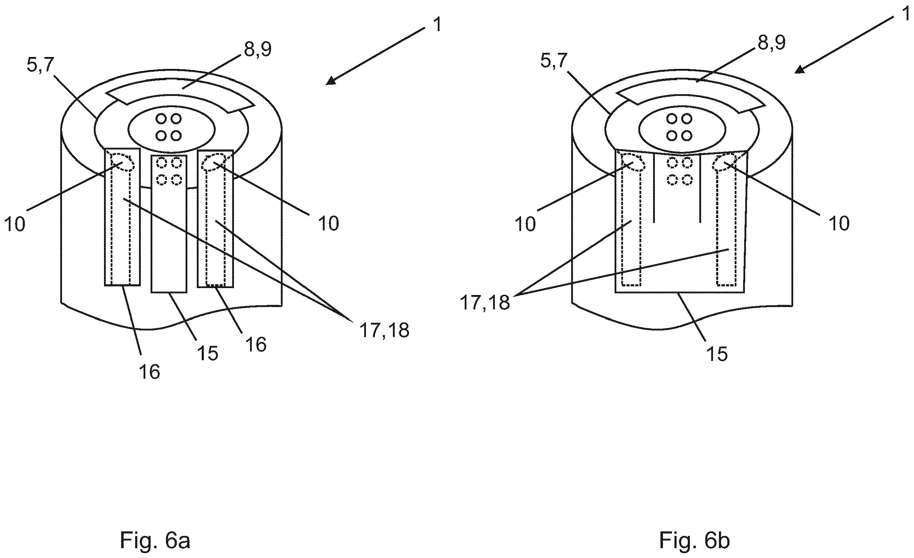

Die Figuren 6 a, b zeigen jeweils eine Kontaktierung der Batterieanordnung 1. Die Batterie 3 wird an den Polen 5 durch ein Kontaktelement 15 kontaktiert, welches beispielsweise auf die Batterie 3, insbesondere auf den Pol 5 aufgeschweißt wird. Zur Kontaktierung der Schaltung 7 können weitere Sensorkontaktelemente 16 vorgesehen sein, welche eine Versorgungsschichteinrichtung 18 mit einer Versorgungsschnittstelle 17 bereitstellen. Die Versorgungsschnittstelle 17 kann auf die Sensorkontaktelemente 16 durch Beschichten aufgebracht, insbesondere aufgedruckt sein. Um einen ausreichenden Kontakt zwischen der Versorgungsschnittstelle 17 und der Batterieschnittstelle 10 zu erreichen kann die Versorgungsschnittstelle 17 durch ein leitfähiges Elastomer gebildet sein, welches eine größere Dicke aufweist als die Schaltung 7 und welches durch seine Elastizität etwaige Toleranzen kompensieren kann.

In der Figur 6 b ist eine Alternative gezeigt, wobei die Versorgungsschnittstelle 17 auf dem Kontaktelement 15 angeordnet, insbesondere durch Beschichten, im Speziellen durch Bedrucken aufgebracht ist. In dieser Alternative wird während des Kontaktierens des Pols 5 zugleich die Versorgungsschnittstelle 17 mit der Batterieschnittstelle 10 kontaktiert. Optional kann in dem Kontaktelement 15 randseitig geöffnete Unterbrechungen, wie z.B. Schlitze zwischen dem Pol 5 und der Batterieschnittstelle 10 eingebracht sein, um ein elastisches Ausfedern der Teilabschnitte des Kontaktelements 15 mit der Versorgungsschnittstelle zu ermöglichen.

### Bezugszeichenliste

- 1: Batterieanordnung
- 2: Batteriesystem
- 3: Batterie
- 4: Hülle
- 5: Pol
- 6: Batterieschichteinrichtung
- 7: Schaltung
- 8: Sensorabschnitt
- 9: Anzeigeabschnitt
- 10: Batterieschnittstelle
- 11: Auswerteeinrichtung
- 12: Beobachtungseinrichtung
- 13: Bodenschicht
- 14: Deckschicht
- 15: Kontaktelement
- 16: Sensorkontaktelemente
- 17: Versorgungsschnittstelle
- 18: Versorgungsschichteinrichtung

## Patentansprüche

1. Batterieanordnung (1) für ein Batteriesystem (2)
mit einer Batterie (3) und
mit einer Batterieschichteinrichtung (5), wobei die Batterieschichteinrichtung (5) auf der Batterie (3) aufgebracht ist,
**dadurch gekennzeichnet, dass**
die Batterieschichteinrichtung (5) mindestens einen durch Beschichten aufgebrachten Sensorabschnitt (8) zur Erfassung einer Kenngröße der Batterie (3) aufweist.

2. Batterieanordnung (1) nach Anspruch 1, **dadurch gekennzeichnet, dass** der Sensorabschnitt (8) einen Temperatursensor aufweist, wobei der Temperatursensor zur Messung einer Temperatur der Batterie (3) als die Kenngröße ausgebildet ist.

3. Batterieanordnung (1) nach Anspruch 1 oder 2, **dadurch gekennzeichnet, dass** der Sensorabschnitt (8) einen Dehnungsmessstreifensensor aufweist, wobei der Dehnungsmessstreifensensor zur Messung einer Ausdehnung der Batterie als die Kenngröße ausgebildet ist.

4. Batterieanordnung (1) nach einem der vorhergehenden Ansprüche, **dadurch gekennzeichnet, dass** der Sensorabschnitt (8) einen Alterungs- und/oder Zyklussensor aufweist, wobei der Alterungs- und/oder Zyklussensor zur Messung einer Alterung und/oder eine Zykluszahl als die Kenngröße ausgebildet ist.

5. Batterieanordnung (1) nach einem der vorhergehenden Ansprüche, **dadurch gekennzeichnet, dass** der Sensorabschnitt (8) mehrfach umlaufend und/oder spiralförmig um die Batterie (3) ausgebildet ist.

6. Batterieanordnung (1) nach einem der vorhergehenden Ansprüche, **dadurch gekennzeichnet, dass** die Batterieschichteinrichtung (5) einen durch Beschichten aufgebrachten Anzeigeabschnitt (9) zur Anzeige einer Kenngröße der Batterie (3) und/oder des Sensorabschnitts (8) aufweist.

7. Batterieanordnung (1) nach Anspruch 5, **dadurch gekennzeichnet, dass** der Anzeigeabschnitt (9) fremdenergieversorgbar ist und eine aktive Anzeige bildet.

8. Batterieanordnung (1) nach einem der vorhergehenden Ansprüche 5 bis 7, **dadurch gekennzeichnet, dass** der Anzeigeabschnitt (9) zur Aussendung einer Wärmestrahlung zur Anzeige der Kenngröße ausgebildet ist.

9. Batterieanordnung (1) nach einem der vorhergehenden Ansprüche 5 bis 8, **dadurch gekennzeichnet, dass** der Anzeigeabschnitt (9) eine Halbleiterstruktur zur Aussendung einer Lichtstrahlung zur Anzeige der Kenngröße aufweist. (OLED)

10. Batterieanordnung (1) nach einem der vorhergehenden Ansprüche, **dadurch gekennzeichnet, dass** die Batterieanordnung (1) ein Kontaktelement (15) zur Kontaktierung der Batterie (3) mit einer Verbraucherstruktur sowie eine Versorgungsschichteinrichtung (18) zur Kontaktierung der Batterieschichteinrichtung (5) aufweist, wobei die Versorgungsschichteinrichtung (18) auf dem Kontaktelement (15) durch Beschichten aufgebracht ist.

11. Batterieanordnung (1) nach Anspruch 10, **dadurch gekennzeichnet, dass** die Batterieschichteinrichtung (5) eine Batterieschnittstelle (10) und die Versorgungsschichteinrichtung (18) eine Versorgungsschnittstelle (17) aufweist, wobei die Schnittstellen (10,17) so ausgebildet sind, dass diese bei einer Kontaktierung der Batterie (3) mit dem Kontaktelement (15) miteinander verbunden werden.

12. Batterieanordnung (1) nach Anspruch 11, **dadurch gekennzeichnet, dass** die Batterie (3) eine Polseite mit mindestens einem Pol (5) und das Kontaktelement (15) eine Kontaktseite zur Kontaktierung des Pols (5) aufweist, wobei die Batterieschnittstelle (10) auf der Polseite und die Versorgungsschnittstelle (17) auf der Kontaktseite angeordnet sind.

13. Batterieanordnung (1) nach Anspruch 11 oder 12, **dadurch gekennzeichnet, dass** die Batterieschnittstelle (10) und/oder die Versorgungsschnittstelle (17) für eine Vierpunktmessung von einem Widerstandswert des Sensorabschnitts (8) ausgebildet sind.

14. Batterieanordnung (8) nach einem der vorhergehenden Ansprüche, **gekennzeichnet durch** eine Auswerteeinrichtung (11) zur messtechnischen Erfassung der Kenngrößen des Sensorabschnitts (8) und/oder durch eine Beobachtungseinrichtung (12) zur visuellen Erfassung der Anzeige des Anzeigeabschnitts (9).

15. Batteriesystem (2) mit einer Mehrzahl der Batterieanordnungen (1) der vorhergehenden Ansprüche.
